# EUROPÄISCHE PATENTANMELDUNG

(11) **EP 3 269 842 A1**
(43) Veröffentlichungstag der Anmeldung: **17.01.2018**
(21) Anmeldenummer: 16178965.6
(22) Anmeldetag: 12.07.2016
(51) Int. Cl.: C23C 26/02, C23C 26/00

(54) **VERFAHREN ZUM HERSTELLEN EINES BAUTEILS UND BAUTEIL**

(71) Anmelder: Siemens Aktiengesellschaft, 80333 München (DE)
(72) Erfinder: Anton, Reiner, 14193 Berlin (DE); Bostanjoglo, Georg, 14163 Berlin (DE); Flores Renteria, Arturo, 12161 Berlin (DE); Grodzki, Jacek, 14089 Berlin (DE); Laux, Britta, 14059 Berlin (DE); Lorenz, Thomas, 14193 Berlin (DE); Maiz, Khaled, 13355 Berlin (DE); Neddemeyer, Torsten, 14612 Falkensee (DE); Schumann, Eckart, 13503 Berlin (DE); Settegast, Silke, 10439 Berlin (DE); Söl, Rüstü, 13581 Berlin (DE)

(57) **Zusammenfassung**

Die Erfindung betrifft ein Verfahren zum Herstellen eines Bauteils, insbesondere einer Turbinenlaufschaufel einer Gasturbine, aufweisend die Schritte:
- Herstellen eines Grundkörpers aus einem metallischen Werkstoff;
- Herstellen einer wenigstens eine intermetallische Phase enthaltenden Funktionslegierung, basierend aus Nickel oder Cobalt oder einer Nickel-basierten Superlegierung oder einer Cobalt-basierten Superlegierung; und
- Anordnen der Funktionslegierung an wenigstens einem Abschnitt des Grundkörpers, wobei wenigstens ein Anteil der Funktionslegierung vor oder nach ihrer Anordnung an dem Grundkörper durch Oxidation der intermetallischen Phase in einen Metall-Keramik-Verbundwerkstoff umgewandelt wird.

## Beschreibung

Die Erfindung betrifft ein Verfahren zum Herstellen eines Bauteils, insbesondere einer Turbinenlaufschaufel einer Gasturbine.

Des Weiteren betrifft die Erfindung ein Bauteil, insbesondere eine Turbinenlaufschaufel einer Gasturbine.

Es gibt Anwendungsfälle, bei denen Bauteile mit höchsten mechanischen und thermischen Belastungen beaufschlagt werden und zusätzlich vor Korrosion und Verschleiß geschützt werden müssen. Ein solcher Anwendungsfall liegt beispielsweise bei Turbinenlaufschaufeln für Industrieturbinen und Fluggasturbinen vor.

Der hierbei am stärksten betroffene Bereich einer Turbinenlaufschaufel liegt an einer Anstreifkante bzw. Dichtspitze der Turbinenlaufschaufel vor, welche die Funktion übernimmt, im Betrieb einer Gasturbine die Leckströmungen möglichst gering und den Wirkungsgrad der Gasturbine möglichst hoch zu halten.

Im Betrieb einer Gasturbine kommt es insbesondere durch den Sauerstoff im Abgasstrom zur oxidativen Degradation an der Anstreifkante und damit zu einer Zersetzung der Anstreifkante. Die dadurch verursachte Vergrößerung der Radialspalte zwischen den Turbinenlaufschaufeln und einem diese umgebenden Turbinengehäuse führt zu einem Wirkungsgradverlust der Gasturbine.

Stand der Technik ist eine Kühlung einer Turbinenlaufschaufel durch darin eingebrachte Kühlkanäle. Die Turbinenlaufschaufel ist üblicherweise mit einem Oxidationsschutz versehen, welcher eine thermische Spritzschicht, beispielsweise aus MCrAlY und gegebenenfalls noch eine Wärmedämmschicht (TBC-Schicht) enthalten kann. In der Praxis muss in vielen Fällen jede Turbinenlaufschaufel auf Endmaß abgelängt werden, so dass die am höchsten oxidativ beaufschlagte Region der Turbinenlaufschaufel nach der mechanischen Bearbeitung bzw. Ablängung ungeschützt vorliegt.

Auch eine mittels einer Beschichtung geschützte Schaufelspitze einer Turbinenlaufschaufel kann durch Einlaufvorgänge der Gasturbine bzw. Anstreifvorgänge an dem Turbinengehäuse verschleißen. Dies ist bei einer Beschichtung insofern kritisch, da das für den Oxidationsschutz notwendige Aluminium-Depot zerstört wird.

In manchen Fällen wird für das Einlaufen der Gasturbine eine spezielle Beschichtung, sogenannte Abradable, von Ringsegmenten des Turbinengehäuses oder Leitschaufeln eingesetzt. Selbst wenn diese Beschichtung nicht zu einem Verschleißen der Anstreifkante der einer Turbinenlaufschaufel führen sollte, kann dies vorkommen.

Eine Aufgabe der Erfindung ist es, die Verschleißfestigkeit eines Bauteils, insbesondere einer Turbinenlaufschaufel einer Gasturbine, zu erhöhen.

Ein erfindungsgemäßes Verfahren zum Herstellen eines Bauteils, insbesondere einer Turbinenlaufschaufel einer Gasturbine, umfasst die Schritte:
- Herstellen eines Grundkörpers aus einem metallischen Werkstoff;
- Herstellen einer wenigstens eine intermetallische Phase enthaltenden Funktionslegierung, basierend aus Nickel oder Cobalt oder einer Nickel-basierten Superlegierung oder einer Cobalt-basierten Superlegierung; und
- Anordnen der Funktionslegierung an wenigstens einem Abschnitt des Grundkörpers, wobei wenigstens ein Anteil der Funktionslegierung vor oder nach ihrer Anordnung an dem Grundkörper durch Oxidation der intermetallischen Phase in einen Metall-Keramik-Verbundwerkstoff umgewandelt wird.

Erfindungsgemäß ist wenigstens ein Abschnitt des Bauteils, der bei einem bestimmungsgemäßen Einsatz des Bauteils in einem Kontakt mit einem weiteren Bauteil gelangt bzw. gelangen kann, aus einem Keramik-Metall-Verbundwerkstoff hergestellt. Dieser Abschnitt des Bauteils ist hierdurch sehr verschleißfest ausgebildet, wodurch die Verschleißfestigkeit des Bauteils erhöht wird. Die höhere Verschleißfestigkeit des Abschnitts des Bauteils wird durch eine teilweise Umwandlung der rein metallischen Mikrostruktur der Funktionslegierung in den Metall-Keramik-Verbundwerkstoff hergestellt.

Bei einem Bauteil in Form einer Turbinenlaufschaufel kann der verschleißfestere Abschnitt insbesondere im Bereich der Anstreifkante der Turbinenlaufschaufel angeordnet sein bzw. diese wenigstens teilweise ausbilden. Die erhöhte Verschleißbeständigkeit der Anstreifkante der Turbinenlaufschaufel erleichtert die Einschleifphase von entsprechenden Turbinenlaufschaufeln, in der die Anstreifkanten in Kontakt mit einer Beschichtung auf einem Ringsegment des Turbinengehäuses oder aus einer Leitschaufel gelangen, und führt dazu, dass ein Oxidationsschutz an der Anstreifkante, beispielsweise in Form einer MCrAlY-Schicht oder einer Aluminierschicht, insbesondere in Bereichen der Anstreifkante, die nicht durch den Keramik-Metall-Verbundwerkstoff gebildet sind, weitestgehend erhalten bleibt. Die höhere Verschleißfestigkeit von mit dem erfindungsgemäßen Verfahren hergestellten Turbinenlaufschaufeln führt auch dazu, dass auf teure YbZrO-Einlaufschichten, sogenannte Abradables, verzichtet werden kann und stattdessen günstige TBC-Schichten als Abradable eingesetzt werden können.

Die Erzeugung des verschleißbestädigeren Keramik-Metall-Verbundwerkstoffs erfolgt erfindungsgemäß über den Mechanismus der inneren Oxidation. Oxidiert werden intermetallische Phasen der Funktionslegierung, wie beispielsweise Ni₅Zr, CoₓZr_{y}, NiAl, Ni₃Al oder weitere intermetallische Phasen von Nickel bzw. Cobalt mit Y, Hf, Gd, Ce, Sc, La oder anderen Seltenerdenmetallen. Diese intermetallischen Phasen entstehen durch die Erstarrung von Nickel oder Cobalt bzw. der jeweiligen Funktionslegierung mit einer ausreichenden Menge der erwähnten Legierungselemente bzw. einer Kombination daraus. Eine erfindungsgemäße Superlegierung kann ausscheidungsgehärtet sein oder auch nicht. Eine Superlegierung kann erfindungsgemäß konzentrationsmäßig auch geringfügig außerhalb der sonstigen bekannten Superlegierungen liegen. In jedem Fall ist Zirconium und Yttrium für die Bildung von ZrO₂ bzw. Aluminium und mindestens ein weiteres Element, insbesondere Yttrium, für die Bildung von Al₂O₃ notwendig. Die Bildung von Al₂O₃ kann unter Verwendung des Rhines-Pack-Verfahren oder anderweitig erfolgen.

Die erfinderische Idee der in situ erfolgenden inneren Oxidation der Funktionslegierung beruht auf der Tatsache, dass eine Diffusion von Elementen, die eine zu oxidierende intermetallische Phase ausbilden, eine vernachlässigbar geringe Diffusion in Nickel bzw. Cobalt bzw. in die jeweilige Funktionslegierung aufweisen muss und die Kinetik der inneren Oxidation lediglich durch die Diffusion von Sauerstoff in den jeweiligen Werkstoff hinein beeinflusst wird.

Zur Bildung von ZrO₂ sollte die Funktionslegierung Yttrium enthalten, wodurch insbesondere die Diffusionsrate von O₂ erheblich gesteigert werden kann. Das Verhältnis von Zirconium zu Yttrium kann beispielsweise 5:1 betragen. Die Anlieferung von O₂ erfolgt dann über das gebildete Oxid. Eine für die Durchführung der Oxidation benötigte Glühzeit ist vorzugsweise derart gewählt, dass eine interpenetrierende Oxidstruktur generiert wird.

Die Oxidationsbeständigkeit des Bauteils, insbesondere die Oxidationsbeständigkeit des Grundkörpers und/oder der Multifunktionsgeräte, kann mit bekannten Methoden hergestellt werden. Es kann beispielsweise ein thermisches Spritzen oder ein PVD-Prozess oder ein CVD-Prozess (z.B. Alitieren) eingesetzt werden.

Der Grundkörper des Bauteils kann beispielsweise unter Verwendung eines Feingussverfahrens hergestellt werden. Die Funktionslegierung kann auch zwei oder mehrere intermetallische Phasen enthalten.

Die Funktionslegierung wird bevorzugt unter Verwendung von wenigstens einem Legierungselement oder einer Kombination von wenigstens zwei Legierungselementen hergestellt, ausgewählt aus der Gruppe umfassend Zirconium, Aluminium, Yttrium, Hafnium, Gadolinium, Cer, Scandium, Lanthan und weiteren Seltenerdenmetallen. Zur Bildung der intermetallischen Phasen sind Zusätze wie Aluminium, Zirconium, Yttrium, Hafnium, Gadolinium, Cer, Scandium, Lanthan oder anderen Elemente in ausreichender Menge nötig, damit bei dendritischer Erstarrung ein interpenetrierendes System aus Metall und intermetallischer, oxidierfähiger Phase entsteht. Ein Grundoxidbildner kann insbesondere Aluminium oder Zirconium sein, wobei weitere Oxidationshilfselemente wie Yttrium, Hafnium, Gadolinium, Cer, Scandium oder Lanthan hinzukommen können.

Der Abschnitt des Grundkörpers wird bevorzugt vor der Anordnung der Funktionslegierung an dem Abschnitt zumindest teilweise mit einer Oxidationsschutzschicht beschichtet. Die Oxidationsschutzschicht kann beispielsweise durch thermisches Spritzen oder durch ein PVD-Verfahren erzeugt werden. Die Oxidationsschutzschicht kann beispielsweise aus MCrAlY hergestellt oder eine Aluminierschicht (Alitierschicht) sein.

Bevorzugt wird an dem Abschnitt des Grundkörpers wenigstens eine Nut ausgebildet, wobei die Nut mit der Oxidationsschutzschicht beschichtet wird, wobei anschließend ein die Funktionslegierung enthaltender Lotwerkstoff in die Nut eingebracht wird. Anschließend kann zumindest ein Anteil der Funktionslegierung durch Oxidation der darin enthaltenen intermetallischen Phase in den Metall-Keramik-Verbundwerkstoff umgewandelt werden. Der Lotwerkstoff kann beispielsweise aus 98%-99% Nickel, 0% - 2% Zirconium und 0% - 2% Yttrium enthalten. Statt Nickel kann auch eine Funktionslegierung (Grundwerkstoff) mit 0% - 2% Zirconium und 0% bis 2% Yttrium eingesetzt werden. Andere Lotwerkstoffe aus den oben genannten Elementen oder aus verschiedenen Kombinationen dieser Elemente sind ebenfalls möglich. Die Zusammensetzung des Lotwerkstoffs ist vorzugsweise derart gewählt, dass bei Erstarrung (durch Guss oder Löten mit nicht isothermer Erstarrung) eine hohe Menge an Eutektikum anfällt. In diesem Eutektikum sollte ein ausreichend hoher Volumenanteil an intermetallischen Phasen mit Nickel bzw. Cobalt anfallen, wie etwa Ni₅Zr, NiAl, Ni₃Al, Ni₂(Zr,Y), Ni₁₀(Zr,Y)₇, Ni₅Hf oder weiteren intermetallischen Phasen, die bei ihrer Oxidation Zr-Oxide oder Al-Oxide bilden können (oxidierfähige Phasen). Ein Gefügeanteil der intermetallischen Phasen ist vorzugsweise derart groß, dass ein interpenetrierendes System entstehen kann, wobei die Sauerstoff-Anlieferung durch das gebildete Oxid erfolgt. Die Ausbildung von einer oder mehreren entsprechenden Nuten an dem Abschnitt des Bauteils kann mittels Senkerodieren oder Drahterodieren an den Stellen erfolgen, an denen später die verschleißfesteren Gefügebereiche aus dem Keramik-Metall-Verbundwerkstoff vorliegen sollen. Die in die Nut eingebrachte Oxidationsschutzschicht kann eine thermische Spritzschicht oder eine durch ein PVD-Verfahren, ein CDV-Verfahren oder galvanisch erzeugte Aluminierschicht sein. Bei einer CVD-Schicht und einer PVD-Schicht sollte das gesamte Aluminium zu Al₂O₃ umgesetzt werden. Gegebenenfalls kann die Funktionslegierung einen Schmelzpunktsenker, beispielsweise Bor, Silicium, Germanium oder dergleichen, enthalten.

Die Durchführung des Diffusionslötverfahrens kann derart erfolgen, dass zunächst eine Kurzzeit-Diffusionslötbehandlung durchgeführt, mit dem Ziel, einen nicht isotherm erstarrten Gefügebereich zu erhalten. Hierdurch kommt es zur Bildung von Restschmelzebereichen mit oxidationsfähigen Phasen. Anschließend kann eine Wärmebehandlung der oxidationsfähigen Phasen bei ausreichend niedrigem O₂-Partialdrücken und ausreichenden hohen Temperaturen erfolgen, so dass lediglich die oxidationsfähigen Phasen oxidieren, jedoch nicht der Grundwerkstoff des Lotwerkstoffs bzw. der Funktionslegierung.

Bevorzugt wird nach der Umwandlung der Funktionslegierung ein Bauteilabschnitt von dem Bauteil abgetrennt, an dem ein Teil der Nut angeordnet ist, wobei eine durch das Abtrennen des Bauteilabschnitts freigelegte Oberfläche des übrigen Bauteils mit einer Oxidationsschutzschicht beschichtet wird. Insbesondere kann es erforderlich sein, ein Bauteil in Form einer Turbinenlaufschaufel auf ein vorgegebenes Maß abzulängen. Die Schaufelspitze der Turbinenlaufschaufel sollte ausreichend lang sein, weil es insbesondere bei einem Diffusionslötverfahren zu Anschmelzungen im oberen Bereich der Schaufelspitze kommen kann. Diese Anschmelzungen werden durch die mechanische Bearbeitung bzw. das Abtrennen des Bauteilabschnitts entfernt. Anschließend wird die freigelegte Oberfläche des übrigen Bauteils, also nicht des abgetrennten Bauteilabschnitts, mit der Oxidationsschutzschicht, beispielsweise eine Alitierschicht, beschichtet oder es wird die freigelegte Oberfläche durch (elektro-)chemisches Auflösen von Grundwerkstoff-Bereichen und anschließende Einbringung einer MCrAlY-Schicht beschichtet. In jedem Fall sollte an der freigelegten Oberfläche sowohl ein Verschleißschutz, als auch ein Oxidationsschutz bestehen, was gemäß dieser Ausgestaltung des Verfahrens realisiert werden kann.

Ein den verschleißfesten Oberflächenabschnitt zumindest teilweise ausbildender Formkörper wird bevorzugt aus einem Nickel oder Cobalt enthaltenden Werkstoff separat hergestellt, wobei der Werkstoff nach Herstellung des Formkörpers unter Wärmeeinwirkung in die Funktionslegierung umgewandelt wird, wobei die Funktionslegierung durch Oxidation der intermetallischen Phase in den Metall-Keramik-Verbundwerkstoff umgewandelt wird, wobei der Formkörper zumindest teilweise mit einer Oxidationsschutzschicht beschichtet werden kann, wobei an dem Grundkörper wenigstens eine Ausnehmung zur zumindest teilweise Aufnahme des Formkörpers ausgebildet wird, und wobei der Formkörper zumindest teilweise in die Ausnehmung eingefügt und an dem Grundkörper befestigt wird. Der Formkörper kann in Form eines Halbzeugs beispielsweise als Stange, Platte, Einlegeteil oder Auflegeteil in einem Gussprozess hergestellt werden und beispielsweise eine Anstreifkante einer Turbinenlaufschaufel ausbilden. Nach Umwandlung des Werkstoffs in die Funktionslegierung wird zumindest ein Anteil der Funktionslegierung durch innere Oxidation in den Keramik-Metall-Verbundwerkstoff umgewandelt. Die Oxidationsschutzschicht kann beispielsweise eine Aluminierschicht, eine Alitierschicht oder eine MCrAlY-Schicht sein. Die Ausnehmung für den Formkörper an dem Grundkörper kann als Passform für den Formkörper ausgebildet sein. Der Formkörper kann insbesondere zur Ausbildung einer Anstreifkante einer Turbinenlaufschaufel verwendet werden. Nach Anordnung des Formkörpers an dem Grundkörper kann auf die durch den Formkörper zumindest teilweise ausgebildete Anstreifkante eine Oxidationsschutzschicht, beispielsweise eine MCrAlY-Schicht aufgebracht werden. Das Befestigen des Formkörpers an dem Grundkörper kann beispielsweise mittels Spark Plasma Sintering, Diffusionslöten, Reibschweißen oder auch mechanisch, beispielsweise über eine Schraubverbindung, durch Nieten oder dergleichen, erfolgen.

Bevorzugt wird ein Strahlgut aus der Funktionslegierung hergestellt, wobei nach Herstellung des Strahlguts wenigstens ein Anteil der Funktionslegierung durch Oxidation der intermetallischen Phase in den Metall-Keramik-Verbundwerkstoff umgewandelt wird, und wobei ein Bereich des Grundkörpers mit dem Strahlgut bestrahlt wird. Das Strahlgut kann grobkörnig, beispielsweise mit einem Korndurchmesser von etwa 8 mm, hergestellt werden. Vor dem Bestrahlen des Grundkörpers mit dem Strahlgut wird vorzugsweise eine Oxidationsschutzschicht auf den zu bestrahlenden Bereich des Grundkörpers aufgebracht. Beispielsweise kann eine mit einer MCrAlY-Schicht beschichtete Anstreifkante einer Turbinenlaufschaufel mit dem Strahlgut bestrahlt werden, so dass Strahlgutpartikel in die MCrAlY-Schicht eingebaut werden.

Ein erfindungsgemäßes Bauteil, insbesondere Turbinenlaufschaufel einer Gasturbine, umfasst einen Grundkörper aus einem metallischen Werkstoff und wenigstens einen an dem Grundkörper angeordneten, einen verschleißfesten Oberflächenabschnitt des Bauteils zumindest teilweise ausbildenden Bauteilabschnitt, der aus einem Metall-Keramik-Verbundwerkstoff hergestellt ist.

Mit dem Bauteil sind die oben mit Bezug auf das Verfahren genannten Vorteile entsprechend verbunden. Insbesondere kann das Bauteil unter Verwendung des Verfahrens gemäß einer der oben genannten Ausgestaltungen oder einer beliebigen Kombination von wenigstens zwei dieser Ausgestaltungen miteinander hergestellt werden. Insofern können vorteilhafte Ausgestaltungen des Verfahrens vorteilhafte Ausgestaltungen des Bauteils sein, auch wenn hierauf im Folgenden nicht explizit hingewiesen wird.

Bevorzugt ist zwischen dem Bauteilabschnitt und dem Grundkörper zumindest teilweise eine Oxidationsschutzschicht angeordnet. Mit dieser Ausgestaltung sind die oben mit Bezug auf die entsprechende Ausgestaltung des Verfahrens genannten Vorteile entsprechend verbunden.

Bevorzugt ist an dem Grundkörper wenigstens eine Ausnehmung ausgebildet, in welcher der Bauteilabschnitt zumindest teilweise angeordnet ist. Die Ausnehmung kann als parallel oder senkrecht zu einem Rand des Grundkörpers verlaufende Nut ausgebildet sein. Mit dieser Ausgestaltung sind die oben mit Bezug auf die entsprechende Ausgestaltung des Verfahrens genannten Vorteile entsprechend verbunden.

Im Folgenden wird die Erfindung unter Bezugnahme auf die anliegenden Figuren anhand bevorzugter Ausführungsformen beispielhaft erläutert, wobei die nachfolgend dargestellten Merkmale sowohl jeweils für sich genommen, als auch in unterschiedlicher Kombination miteinander einen weiterbildenden oder vorteilhaften Aspekt der Erfindung darstellen können. Es zeigen:
Fig. 1 eine schematische Darstellung eines Ausführungsbeispiels für ein erfindungsgemäßes Bauteil in Form einer Turbinenlaufschaufel;
Fig. 2 eine schematische Darstellung einer Zusammensetzung einer Funktionslegierung;
Fig. 3 eine schematische Darstellung eines weiteren Ausführungsbeispiels für ein erfindungsgemäßes Bauteil in Form einer Turbinenlaufschaufel;
Fig. 4 eine schematische Darstellung eines weiteren Ausführungsbeispiels für ein erfindungsgemäßes Bauteil in Form einer Turbinenlaufschaufel; und
Fig. 5 eine schematische Darstellung eines weiteren Ausführungsbeispiels für ein erfindungsgemäßes Bauteil in Form einer Turbinenlaufschaufel.

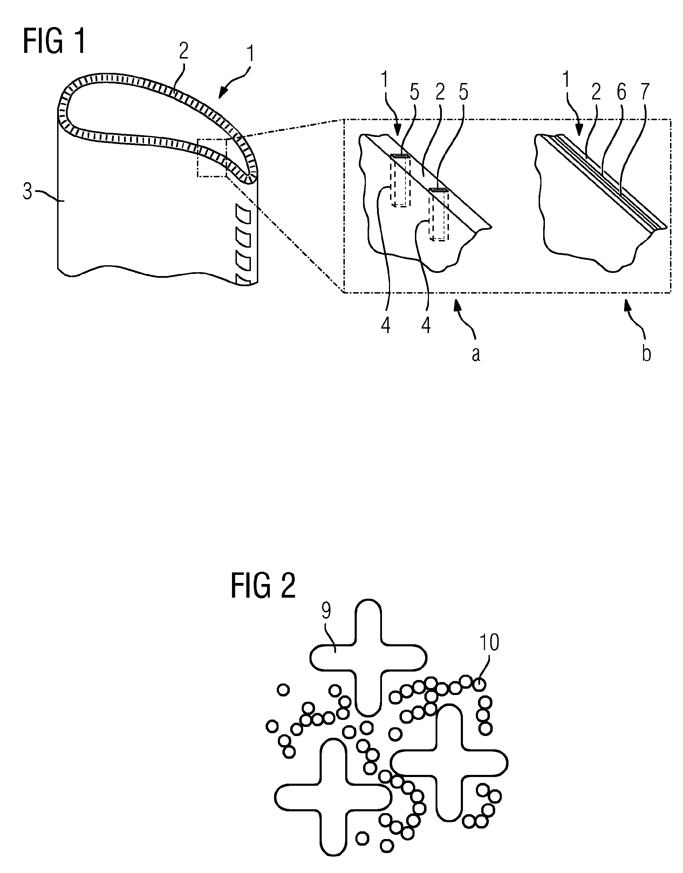

Fig. 1 zeigt eine schematische Darstellung eines Ausführungsbeispiels für ein erfindungsgemäßes Bauteil 1 in Form einer Turbinenlaufschaufel. In Fig. 1 ist rechts ein vergrößerter Bereich des Bauteils 1 gezeigt.

Das Bauteil 1 umfasst eine Anstreifkante 2 und einen die Anstreifkante 2 teilweise ausbildenden Grundkörper 3. Gemäß Ausführungsform a) sind in die Anstreifkante 2 bzw. den Grundkörper 3 senkrecht verlaufende Nuten 4 eingebracht, in denen jeweils ein Keramik-Metall-Verbundwerkstoff 5 angeordnet ist. Gemäß Ausführungsform b) ist in die Anstreifkante 2 bzw. den Grundkörper 3 eine parallel verlaufende Nut 6 eingebracht, in der ein Keramik-Metall-Verbundwerkstoff 7 angeordnet ist. Alternativ können in die Anstreifkante 2 bzw. den Grundkörper 3 nicht gezeigte, schräg verlaufende Nuten eingebracht sein, in denen jeweils ein Keramik-Metall-Verbundwerkstoff 7 angeordnet ist. Der Grundkörper 3 kann unter Verwendung eines Feingussverfahrens hergestellt worden sein. Alternativ kann die Anstreifkante bzw. Dichtspitze des Grundkörpers 3 auch mittels additiver Fertigungsverfahren hergestellt werden. Die jeweilige Nut 4 bzw. 6 kann mit einer nicht gezeigten Oxidationsschutzschicht beschichtet sein. Zur Herstellung des Keramik-Metall-Verbundwerkstoffs 5 bzw. 7 wird ein eine Funktionslegierung enthaltender Lotwerkstoff in die jeweilige Nut 4 bzw. 6 eingebracht. Anschließend wird wenigstens ein Anteil der Funktionslegierung durch Oxidation der darin enthaltenen intermetallischen Phase oder Phasen in den Metall-Keramik-Verbund-werkstoff 5 bzw. 7 umgewandelt.

Fig. 2 zeigt eine schematische Darstellung einer Zusammensetzung einer Funktionslegierung, wie sie bei der Erstarrung entsteht. Die Funktionslegierung umfasst eine primäre Phase 9, beispielsweise aus Nickel oder einer γ-Phase der Funktionslegierung. Zudem umfasst die Funktionslegierung Bereiche 10 mit intermetallischen oxidierfähigen Phasen, wodurch ein interpenetrierendes System gegeben ist. Die Bereiche 10 können eutektische Bereiche oder ein Restschmelz-Eutektikum der Funktionslegierung sein. Die Funktionslegierung kann durch Umwandlung eines Lotwerkstoffs hergestellt werden.

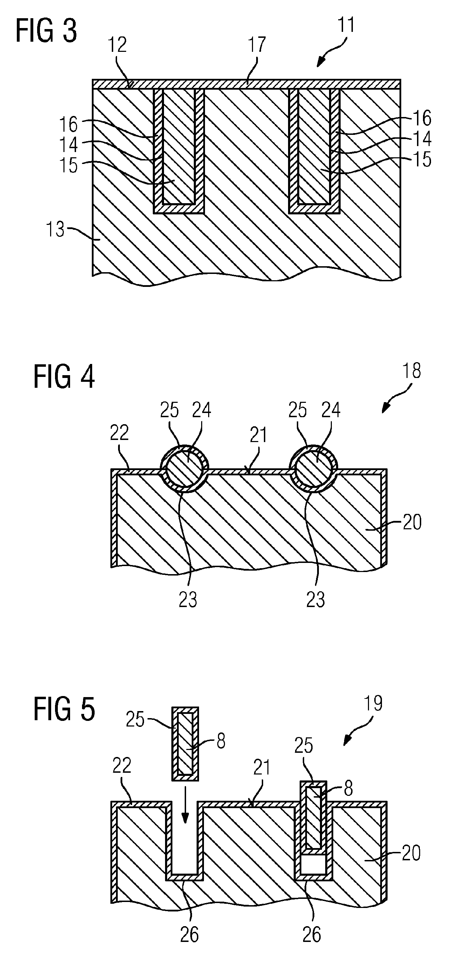

Fig. 3 zeigt eine schematische Darstellung eines weiteren Ausführungsbeispiels für ein erfindungsgemäßes Bauteil 11 in Form einer Turbinenlaufschaufel. Es ist eine Anstreifkante 12 des Bauteils 11 zu sehen, die durch einen Grundkörper 13 des Bauteils 11 mit zwei parallel verlaufenden Nuten 14 und einem in den Nuten 14 vorhandenen Keramik-Metall-Verbundwerkstoff 15 ausgebildet ist. Jede Nut 14 ist mit einer Oxidationsschutzschicht 16 beschichtet. Die Anstreifkante 12 ist mit einer Oxidationsschutzschicht 17 in Form einer Aluminierschicht (Alitierschicht) oder einer MCrAlY-Schicht beschichtet.

Fig. 4 und 5 zeigen schematische Darstellungen von zwei weiteren Ausführungsbeispielen für ein erfindungsgemäßes Bauteil 18 bzw. 19 in Form einer Turbinenlaufschaufel.

Das in Fig. 4 gezeigte Bauteil 18 umfasst einen Grundkörper 20, der eine Anstreifkante 21 teilweise ausbildet. Die Anstreifkante 21 ist mit einer Oxidationsschutzschicht 22, beispielsweise einer MCrAlY-Schicht, beschichtet. An dem Grundkörper 20 sind zwei parallel verlaufende Ausnehmungen 23 ausgebildet, in die jeweils ein stabförmiger Formkörper 24 mit einer kreisförmigen Querschnittsfläche aus einem Keramik-Metall-Verbundwerkstoff teilweise eingefügt ist, wobei jeder Formkörper 24 vorab mit einer Oxidationsschutzschicht 25 beschichtet werden kann. Die Oxidationsschutzschicht 25 kann eine Aluminierschicht, eine Alitierschicht oder eine MCrAlY-Schicht sein. Die Formkörper 24 können an dem Grundkörper 20 mittels Spark Plasma Sintering, Diffusionslöten, Reibschweißen oder auch mechanisch, beispielsweise über eine Schraubverbindung, durch Nieten oder dergleichen, befestigt werden.

Das in Fig. 5 gezeigte Bauteil 19 unterscheidet sich von dem Bauteil 18 allein durch die Ausbildung der Ausnehmungen 26 und die im Querschnitt rechteckige Formgebung der Formkörper 8, die plattenartig ausgebildet sind. Zur Vermeidung von Wiederholungen wird im Übrigen auf die vorstehende Beschreibung des Bauteils 18 verwiesen.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zum Herstellen eines Bauteils (1, 11, 18, 19), insbesondere einer Turbinenlaufschaufel einer Gasturbine, aufweisend die Schritte:
- Herstellen eines Grundkörpers (3, 13, 20) aus einem metallischen Werkstoff;
- Herstellen einer wenigstens eine intermetallische Phase enthaltenden Funktionslegierung, basierend aus Nickel oder Cobalt oder einer Nickel-basierten Superlegierung oder einer Cobalt-basierten Superlegierung; und
- Anordnen der Funktionslegierung an wenigstens einem Abschnitt des Grundkörpers (3, 13, 20), wobei wenigstens ein Anteil der Funktionslegierung vor oder nach ihrer Anordnung an dem Grundkörper (3, 13, 20) durch Oxidation der intermetallischen Phase in einen Metall-Keramik-Verbundwerkstoff (15) umgewandelt wird.

2. Verfahren gemäß Anspruch 1,
wobei die Funktionslegierung unter Verwendung von wenigstens einem Legierungselement oder einer Kombination von wenigstens zwei Legierungselementen hergestellt wird, ausgewählt aus der Gruppe umfassend Zirconium, Aluminium, Yttrium, Hafnium, Gadolinium, Cer, Scandium, Lanthan und weitere Seltenerdenmetalle.

3. Verfahren gemäß Anspruch 1 oder 2,
wobei der Abschnitt des Grundkörpers (3, 13, 20) vor der Anordnung der Funktionslegierung an dem Abschnitt zumindest teilweise mit einer Oxidationsschutzschicht (16, 17, 22) beschichtet wird.

4. Verfahren gemäß Anspruch 3,
wobei an dem Abschnitt des Grundkörpers (3, 13) wenigstens eine Nut (4, 6, 14) ausgebildet wird, wobei die Nut (4, 6, 14) mit der Oxidationsschutzschicht (16) beschichtet wird, und wobei anschließend ein die Funktionslegierung enthaltender Lotwerkstoff in die Nut (4, 6, 14) eingebracht wird.

5. Verfahren gemäß Anspruch 4,
wobei nach der Umwandlung der Funktionslegierung ein Bauteilabschnitt von dem Bauteil (1, 11) abgetrennt wird, an dem ein Teil der Nut (4, 6, 14) angeordnet ist, und wobei eine durch das Abtrennen des Bauteilabschnitts freigelegte Oberfläche des übrigen Bauteils mit einer Oxidationsschutzschicht (17) beschichtet wird.

6. Verfahren gemäß einem der Ansprüche 1 bis 3,
wobei ein Formkörper (8, 24) aus einem Nickel oder Cobalt enthaltenden Werkstoff separat hergestellt wird, wobei der Werkstoff nach Herstellung des Formkörpers (8, 24) unter Wärmeeinwirkung in die Funktionslegierung umgewandelt wird, wobei die Funktionslegierung durch Oxidation der intermetallischen Phase in den Metall-Keramik-Verbundwerkstoff umgewandelt wird, wobei der Formkörper (8, 24) zumindest teilweise mit einer Oxidationsschutzschicht (25) beschichtet werden kann, wobei an dem Grundkörper (20) wenigstens eine Ausnehmung (23, 26) zur zumindest teilweise Aufnahme des Formkörpers (8, 24) ausgebildet wird, und wobei der Formkörper (8, 24) zumindest teilweise in die Ausnehmung (23, 26) eingefügt und an dem Grundkörper (20) befestigt wird.

7. Verfahren gemäß einem der Ansprüche 1 bis 3,
wobei ein Strahlgut aus der Funktionslegierung hergestellt wird, wobei nach Herstellung des Strahlguts wenigstens ein Anteil der Funktionslegierung durch Oxidation der intermetallischen Phase in den Metall-Keramik-Verbundwerkstoff umgewandelt wird, und wobei ein Bereich des Grundkörpers (3, 13, 20) mit dem Strahlgut bestrahlt wird.

8. Bauteil (1, 11, 18, 19),
insbesondere Turbinenlaufschaufel einer Gasturbine, **gekennzeichnet durch** einen Grundkörper (3, 13, 20) aus einem metallischen Werkstoff und wenigstens einen an dem Grundkörper (3, 13, 20) angeordneten, einen verschleißfesten Oberflächenabschnitt des Bauteils (1, 11, 18, 19) zumindest teilweise ausbildenden Bauteilabschnitt (5, 7, 15, 24, 27), der aus einem Metall-Keramik-Verbundwerkstoff hergestellt ist.

9. Bauteil (1, 11, 18, 19) gemäß Anspruch 8,
wobei zwischen dem Bauteilabschnitt (5, 7, 15, 24, 27) und dem Grundkörper (3, 13, 20) zumindest teilweise eine Oxidationsschutzschicht (16, 22) angeordnet ist.

10. Bauteil (1, 11, 18, 19) gemäß Anspruch 8 oder 9,
wobei an dem Grundkörper (3, 13, 20) wenigstens eine Ausnehmung (23, 26) oder Nut (4, 6, 14) ausgebildet ist, in welcher der Bauteilabschnitt (5, 7, 15, 24, 27) zumindest teilweise angeordnet ist.
